# EUROPEAN PATENT SPECIFICATION

(11) **EP 2 750 415 B1**
(45) Date of publication and mention of the grant of the patent: **10.06.2015**
(21) Application number: 13198576.4
(22) Date of filing: 19.12.2013
(51) Int. Cl.: G06F 9/44, H04L 29/08, H04W 4/00, G06F 9/445, H04W 52/02

(54) **Conditional Update of an application on a mobile telecommunication device**
Bedingtes Aktualisieren einer Anwendung auf einem mobilen Telekommunikationsgerät
Actualisation conditionnelle d'une application sur un dispositif de télécommunication mobile

(30) Priority: 28.12.2012 US 201213730113
(43) Date of publication of application: 02.07.2014
(73) Proprietor: SAP SE, 69190 Walldorf (DE)
(72) Inventor: Kassner, Marcel, 69190 Walldorf (DE); Lutzy, Ottmar, 69190 Walldorf (DE); Pasch, Beatrice, 69190 Walldorf (DE); Rummler, Zeno, 69190 Walldorf (DE)
(74) Representative: Richardt Patentanwälte PartG mbB

(56) References cited:
- US-A1- 2011 035 739
- US-B1- 7 096 464
- US-B1- 7 620 392

## Description

### Field of the invention

The disclosure relates to telecommunication systems, and particularly to a method for operating a mobile telecommunication device in an energy saving mode.

### BACKGROUND

The number of mobile applications offered by companies is expected to increase by a factor of more than 10 in the next years. The ongoing trend in telecommunication is to provide mobile devices with enhanced performances that can support such increased number of mobile applications

Performing software updates according to a ranking is known, e.g., from US 7096464 B1.

### SUMMARY

It is an objective of embodiments of the invention to provide for a mobile telecommunication device, and a method. Said objective is solved by the subject matter of the independent claims. Advantageous embodiments are described in the dependent claims.

In one aspect, the invention relates to a method for operating a mobile telecommunications device in a telecommunication system in an energy saving mode, the telecommunication system comprising a development server that is connected to the mobile communications device via a network of the telecommunication system; the mobile telecommunication device comprising a processor, display device and memory; wherein the memory is configured to store a plurality of applications that are executable on the processor. The method comprises at the mobile telecommunication device:
a. providing a mobile application of the plurality of applications comprising first instructions that, when executed, display on the display device a first graphical user interface using a first display pattern;
b. receiving, via the network, from the development server an updated mobile application being an updated version of the mobile application, wherein the updated mobile application comprises second instructions that, when executed, generate on the display a second graphical user interface using a second display pattern;
c. generating a first markup-language record that encodes the first instructions;
d. generating a second markup-language record that encodes the second instructions;
e. in response to a determination that the first and second markup-language records are different, ranking the first and second markup language records according to a predefined ranking criterion;
f. in case the first markup language record is ranked superior to the second markup language record, sending a request to the development server for providing another updated mobile application associated with an updated second display pattern, wherein the request is indicative of the ranking order of the first and second markup language records; and receiving, in response to the request, the other updated mobile application;
g. repeating steps e)-f) until the second markup language record is ranked superior to the first markup language record;
h. replacing the mobile application by the updated mobile application.

According to one embodiment, replacing comprises deleting the mobile application from the mobile telecommunication device.

These features may be advantageous as they may provide a method for maintaining or increasing the display performance of the mobile telecommunication device when installing updated mobile applications. This may be done by saving energy in the mobile telecommunication device that would otherwise be required or consumed when the automatic comparison between the first and second markup-language records is not performed.

The display performance may refer to a reduction of the energy consumption of the display device caused by the display of the updated (second) graphical user interface compared to the display of the first graphical user interface and/or an improvement in the display positioning (e.g. position resolution) of the user interface elements within the updated graphical user interface compared to the first graphical user interface. The display performance may also refer to the speed-up of the display process so as to reduce the time required to display user interface elements on the updated (second) graphical user interface compared to the first graphical user interface.

The term "display pattern" as used herein refers to a pattern of spatially presenting user interface elements on the display device. Such pattern may be obtained by controlling displaying functions (e.g. scrolling function, color function etc.) of the graphical user interface and/or the display device on which the graphical user interface is displayed.

The first markup language record is ranked superior to the second markup language record may refer for example to the fact that the first markup language has higher and/or better performance (e.g. display capabilities) than the second markup language record.

According to one embodiment, the predefined ranking criterion comprises an energy consumption level. The ranking comprises: processing the first and second instructions for determining a first and second energy consumption level of the display device caused by the execution of the first and second instructions respectively, and ranking one record of the first and second markup language records superior to the other record if it has a lower energy consumption level than the other record.

This embodiment may be advantageous as it may constrain the updated mobile application to existing required energy consumption levels to which the existing mobile applications in the mobile telecommunication device are constrained. The ranking based on the energy consumption level may also provide a method for constraining the mobile applications on the mobile telecommunication device to a maximum allowed consumption level. For example, the display device may be attributed a maximum allowed energy consumption contribution to the total energy consumption of the mobile telecommunication device, such that an energy consumption of the display device that is caused by the execution of at least a part of the plurality of applications including the mobile application is below the maximum allowed energy consumption contribution. For example, each application of the plurality of application is constrained to a respective application maximum energy consumption level of the display device that should not be exceeded. For example, the mobile application may be executed in parallel with a second mobile application, such that both applications make use of the display device in the sense that they generate their respective graphical user interfaces on the display device. The energy consumed by the display device for displaying the two graphical user interfaces should be below that maximum allowed energy consumption contribution. In this way, the comparison and ranking used in this embodiment ensure that the new updated mobile application also fulfils the energy consumption requirements for the mobile telecommunication device.

For example, the energy consumption of the display device may depend on the display functions of the graphical user interfaces that are displayed on the display device and/or on the configuration of the display device itself e.g. brightness level of the display device. For example, different types, color and size of user interface elements or objects to display on the display device may have different energy consumption levels.

This embodiment may be advantageous, as it may further save energy by constraining the applications stored in the mobile telecommunication device to follow an energy saving operation mode, such that their contribution to the display must be within an attributed maximum consumption range.

As mentioned above, the maximum allowed energy consumption level is a maximum allowed energy consumption contribution to the total energy consumption of the mobile telecommunication device. This may avoid system failures (e.g. due to the draining of a battery powering the mobile telecommunication device) of the mobile telecommunication device in case the energy consumption of the display device is increasing without stopping constraints that are set, for example, by a maximum contribution to the total energy consumption of the mobile telecommunication device.

According to one embodiment, the predefined ranking criterion comprises a graphical content check result, the method further comprising receiving a first and second graphical content check results of the first and second graphical user interfaces respectively, and comparing the first graphical content check result with the second graphical content check result for performing the ranking.

The graphical content check result may reflect a performance assessment related to the positioning of user interface elements within the first and second graphical user interfaces (e.g. how the user interface elements are arranged within the first and second graphical user interfaces) or to the reduction of the time required to display user interface elements on the second graphical user interface compared to the first graphical user interface. For example, the first and second graphical content check results may comprise numbers and/or booleans.

This embodiment may be advantageous as it may further increase or maintain the display performance of the mobile telecommunication device that are ensured by existing mobile applications of the mobile telecommunication device. This may also provide user-friendly applications in that an updated mobile application before being installed in the mobile telecommunication device it may be checked whether it follows the same display criteria as the original mobile application. This may also provide a transparent (e.g. in the sense that the user of the mobile telecommunication device may not realize that the mobile application has been updated) method for updating the mobile application within the mobile telecommunication device.

According to one embodiment, the first graphical content check result comprises a first similarity factor, wherein the first similarity factor is indicative of a similarity between the first display pattern and a predefined reference display pattern associated with a reference graphical user interface, and the second appearance check result comprises a second similarity factor between the second display pattern and the predefined reference display pattern. The method further comprises determining a first number of matches between user interface elements of the first graphical user interface and user interface elements of the reference graphical user interface; determining a second number of matches between user interface elements of the second graphical user interface and user interface elements of the reference graphical user interface; deriving the first similarity factor from the first number of matches; deriving the second similarity factor from the second number of matches; ranking one record of the first and second markup language records superior to the other record if it has a higher similarity check factor than the other record.

The term "user interface element" as used herein may be understood as a user interface object, or a set of user interface objects, displayed on a display screen of a device. A user interface element comprises a button, a text box, a tab, an icon, a text field, a pane, a check-box item, a menu bar, a title bar, an action bar or item group or the like. A user interface element can likewise be an image, a displayed alphanumeric character or any combination thereof.

This embodiment may provide an accurate method for comparing graphical user interface displays.

According to one embodiment, determining the first number of matches comprises parsing the first markup language record for extracting a display property of each of the user interface elements of the first graphical user interface; parsing a generated reference markup language record of the reference graphical user interface for extracting a display property of each of the user interface elements of the reference graphical user interface; determining one or more first pairs of user interface elements, each comprising a user interface element of the first graphical user interface and another user interface element of the reference graphical user interface; for each pair of the one or more first pairs comparing the display property of the user interface element of the first graphical user interface of the pair with the display property of the user interface element of the reference graphical user interface of the pair for determining whether they match or not, wherein the first number of matches comprises the number of matched pairs.

For example, each pair of the one or more first pairs may comprise a matching user interface element of the first graphical user interface with another user interface element of the reference graphical user interface. Two user interface elements may match to each other if they are of the same type (e.g. buttons, text, etc.) and/or have the same size.

For example, the reference graphical user interface may comprise the first graphical user interface.

According to one embodiment, the first similarity factor comprises the first number of matches divided by the number of user interface elements of the reference graphical user interface.

According to one embodiment, the first similarity factor comprises the first number of matches.

According to one embodiment, determining the second number of matches comprises parsing the second markup language record for extracting a display property of each of the user interface elements of the second graphical user interface; parsing a generated reference markup language record of the reference graphical user interface for extracting a display property of each of the user interface elements of the reference graphical user interface; determining one or more or second pairs of user interface elements, each comprising a user interface element of the second graphical user interface and another user interface element of the reference graphical user interface; for each pair of the one or more second pairs comparing the display property of the user interface element of the second graphical user interface of the pair with the display property of the user interface element of the reference graphical user interface of the pair for determining whether they match or not, wherein the second number of matches comprises the number of matched pairs.

According to one embodiment, the second similarity factor comprises the second number of matches divided by the number of user interface elements of the reference graphical user interface.

According to one embodiment, the second similarity factor comprises the second number of matches.

According to one embodiment, the display property comprises at least one of position, type, size of the user interface element and a combination thereof. This embodiment may provide reliable results of the comparison by using accurate inputs for that comparison.

According to one embodiment, the method further comprises detecting, before generating the second markup-language record, that a user logs in using a different human language than displayed on the first graphical user interface; and determining that the first and second markup-language records are different only in case at least one user-interface element text in the first markup language record has not been translated to the second markup-language record in accordance with the human language.

The two records may be different in the sense that they do not both reflect the correct language of their respective users i.e. only one record has the correct language. For example, in case the first markup-language record may be initially generated for an English speaking user, while the second markup-language record may be generated after a German speaking user logs in; and in case both records have the same language to be displayed, then they are considered to be different since one record does reflect the correct language of its user while the other does not.

This may provide a user-friendly mobile application that displays on its graphical user interface a text dependent on the user's culture.

According to one embodiment, the method further comprises receiving an exception list of multi-language common user-interface element texts, wherein the determining that the first and second markup-language records are different is only performed in case the at least one user-interface element text is outside the exception list. This may save resources that would otherwise be required when not excluding the user interface elements of the exception list from the comparison process.

In another aspect, the invention relates to a mobile telecommunication device in a telecommunication system, wherein the telecommunication system comprises a development server that is connected to the mobile communications device via a network of the telecommunication system; the mobile telecommunication device comprising a processor, display device and memory; wherein the memory is configured to store a plurality of applications that are executable on the processor, wherein a mobile application of the plurality of applications comprises first instructions that, when executed, display on the display device a first graphical user interface using a first display pattern, the mobile telecommunication device comprising:
- a receiving unit adapted for receiving, via the network, from the development server an updated mobile application being an updated version of the mobile application, wherein the updated mobile application comprises second instructions that, when executed, generate on the display device a second graphical user interface using a second display pattern;
- a generating unit adapted for generating a first markup-language record that encodes the first instructions; and generating a second markup-language record that encodes the second instructions;
- an analysis unit adapted for
   a. determining that the first and second markup-language records are different, and ranking the first and second markup language records according to a predefined ranking criterion;
   b. in case the first markup language record is ranked superior to the second markup language record, sending a request to the development server for providing another updated mobile application associated with an updated second display pattern, wherein the request is indicative of the ranking order of the first and second markup language records; and receiving, in response to the request, the other updated mobile application;
   c. repeating steps a)-b) until the second markup language record is ranked superior to the first markup language record;
   d. replacing the mobile application by the updated mobile application.

It is understood that one or more of the aforementioned embodiments may be combined as long as the combined embodiments are not mutually exclusive.

The details of one or more implementations are set forth in the accompanying drawings and the description below. Other features and advantages will be apparent from
the description and drawings, and from the claims.

### DESCRIPTION OF DRAWINGS

FIGS. 1A-F show examples of a UI being tested.
FIGS. 2A-E show an example of a markup-language record.
FIG. 3 shows an example method for testing a UI.
FIG. 4 shows a menu that presents multiple aspects for testing a UI.
FIG. 5 is a block diagram of a computing system that can be used in connection with computer-implemented methods described in this document.
FIG. 6 schematically depicts a mobile telecommunication device according to the present disclosure.

Like reference symbols in the various drawings indicate like elements.

### DETAILED DESCRIPTION

This document describes systems and techniques for processing a UI, before and after revisions are made to the corresponding application, to determine whether the revisions raise any UI issues. For example, it can be determined whether the revision inadvertently has changed the layout of the UI, and if so appropriate correction can be performed. As another example, it can be determined whether a translation was completely and correctly done, or whether the revision inadvertently has caused a translation into another language (e.g., from English to German) to be incorrect or incomplete.

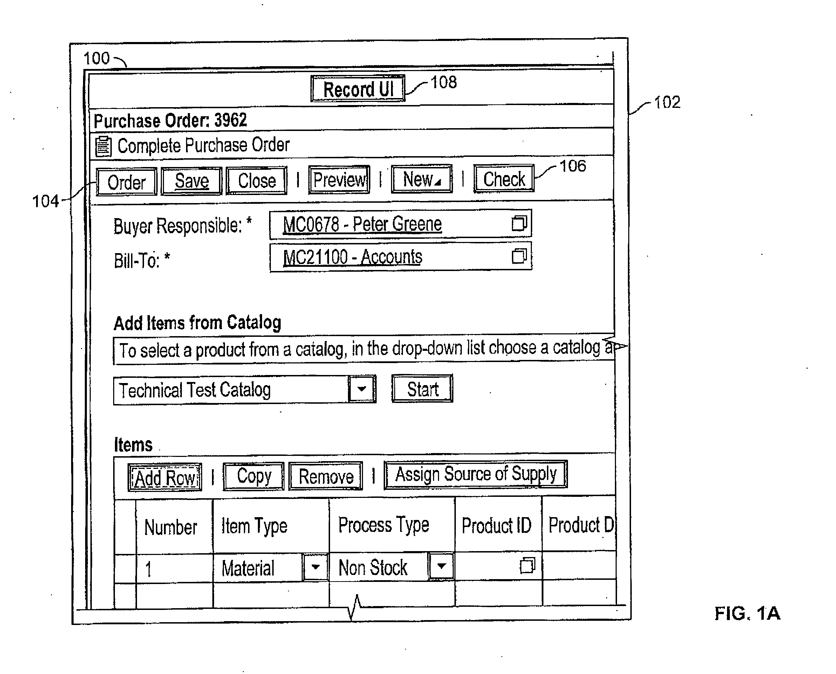

FIGS. 1A-F show examples of a UI 100 being tested. Beginning with FIG. 1A, the UI 100 as illustrated there can be generated by an application,

In the illustrated example, the UI 100 relates to a purchase order. In some implementations, the corresponding application may be launched and open up a record in the application, which causes certain fields, control and information to be presented in the UI. For example, this can be done for purposes of testing the application, including its UI.

The UI 100 is here shown only in part for clarity. The UI includes an element 104 labeled "order" and an element 106 labeled "check", among other features. For example, each of the order and check elements can include a UI input control, such as a button. In some implementations, each element in the UI 100 is uniquely identified (e.g., by a specific ID) and also with corresponding text content that is to be presented to the user.

For example, "order" and "text," respectively, would be included in such text content for these two elements. The development of the application program of the UI 100 can proceed essentially
as follows. The coding of the application is done during a development phase, which has a defined point in time when the development closes. After that time, the application should ideally not be revised any further, or if necessary, only corrections, fixes or other minor adjustments should be made after the close of development. After any such modifications are done, if the application is then approved it can be prepared for its intended use. The UI 100 may be checked. Such checking can relate to the layout of the UI 100. For example, the spatial organization of the UI elements can be verified.

Such checking can also or instead relate to language and/or translation.

Generally, a UI is checked in the desired translated language against the original language of the UI. For a case where a supposedly translated word or phrase is equal to the original, this occurrence is flagged for checking of the translation.

In some implementations, a so-called language acceptance test can be performed automatically. For example, if the log into the system 102 with a particular language (e.g., German) an automatic verification is performed to check that the UI elements contain German text in all applicable places and that no other language (e.g., English) occurs. In some implementations, the logon can automatically occur with a particular language. If errors or discrepancies are discovered they can be flagged to the appropriate connecting source. The result of such a check can be recorded in the system 102. For example, the check result can indicate that as of the date of the test, the current version of the application has the correct layout. Also, or instead, such a check result can indicate that as of the date of the test, the current version of the application passes the language acceptance test.

If the application passes the checking, then the UI 100 in its current form can be recorded. In some implementations, the system 102 can present a control 108.

For example, the control 108 can cause the UI 100 to be recorded using a markup language, such as in an extensible markup language (XML) file. Such a record can reflect the layout and other characteristics of the UI as of the recordation moment, and
can later be used for one or more purposes. In some implementations, the recordation can be done automatically and without being triggered by a separate user input, for example in response to the user indicating that the application passes the applicable test(s).

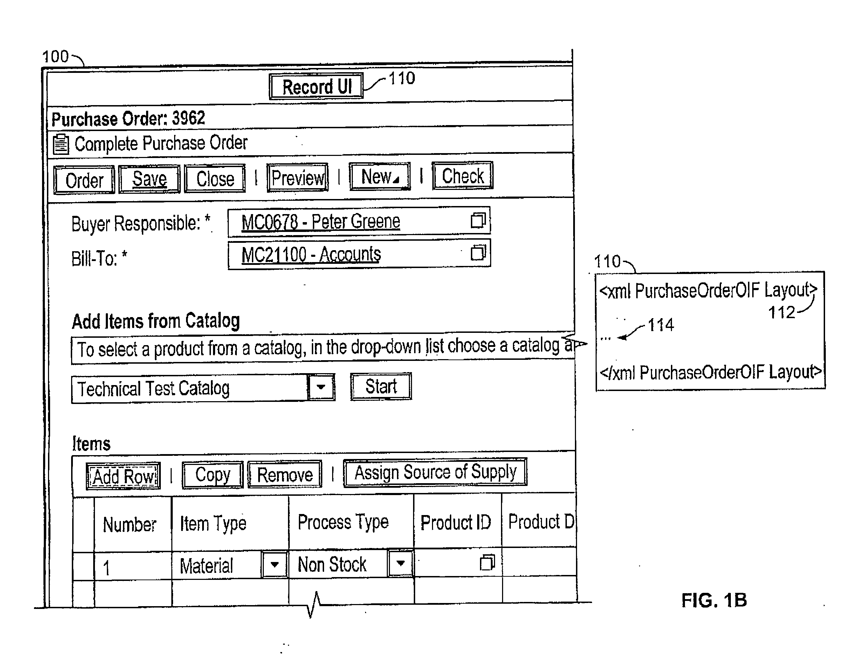

FIG. 1B shows the UI 100 and an XML record 110 that is associated with the UI. For example, the XML record is generated after the UI 100 is checked and found to pass one or more tests (e.g., a layout test and/or a language acceptance test.)

Here, the XML record 110 includes start and end tags 112 that define the markup-language contents corresponding to the UI 100 (as opposed to, say, markup-language contents that may correspond to another UI or to a testing of the UI 100 performed at some other time.) An ellipsis 114 schematically illustrates that the XML record 110 includes content corresponding to the UI 100, but that such content is not explicitly shown here for simplicity. For example, such content can specify the UI 100 in terms of its UI elements, the layout of the UI elements, and the text to be displayed for each of the UI elements. That is, the XML record 110 documents the UI 100 in its current version at the time that the manual checking (e.g., for language acceptance) was performed.

As noted above, however, it happens that the application is modified in some regard after it has been found compliant according to one or more tests. For example,
one or more corrections or other modifications can be done, also after a development phase has officially concluded. In such situations, another markup-language record can be generated based on the revised application, and can be used in ascertaining whether the previously performed test(s) might need to be repeated.

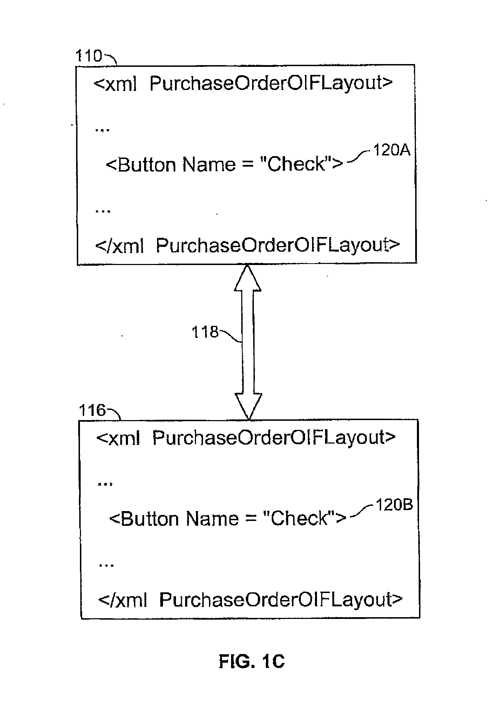

FIG. 1C shows a new XML record 116 that has been generated. This is done some time after the XML record 110 was created, and the application may have undergone one or more revisions in the meantime. The new XML record 116 can be generated as part of an automatic determination whether another manual check of the UI is necessary after the revision, or whether the previous check remains valid. For this or other purposes, a comparison 118 is performed between the original and new XML records. In some implementations, the layout of the UI as reflected in the new XML record can be determined, it can be determined which UI elements are part of the UI according to the new XML record, and/or the associated text for one or more of the UI elements in the new XML record can be determined. Based on one or more portions of information, the comparison 118 can then be performed to assess the change, if any, in the UI since the last manual check. For example, if the original XML record
110 includes a UI element 120A corresponding to a button, then it can be determined whether the new XML record 116 includes a UI element 120B corresponding to the same button.

If the UI passes the test according to the comparison 118, the new XML record 116 can be associated with the check result that was previously obtained. In some implementations, the test can include a layout check and the UI passes this test if a layout reflected by the XML record 110 corresponds to a layout reflected by the new XML record 116. For example, the UI might pass the test because the new XML record 116 includes the UI element 120B (assuming that no other discrepancies are detected.)

That is, generating an association between the previous check results and the XML record shows that the previous check remains valid for this UI. Accordingly, the association indicates that there is no need to repeat the checking for this UI despite the intervening revisions of the application code.

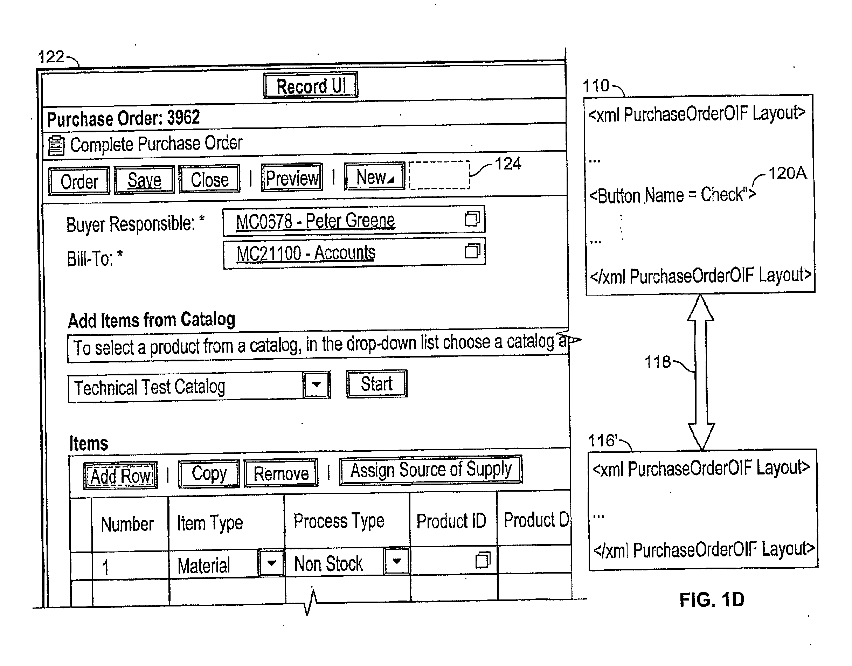

FIG. 1D shows an example where the UI does not pass one or more tests after revision of the application. Particularly, after such revisions, the application generates a UI 122 that is similar to the UI 100 (FIGS. 1A-B) in some regards, but which lacks the "check" button, as indicated by an empty area 124. This is reflected in a new XML record 116', wherein the entry for the Ul element 120B (FIG. 1 C) is not present. Accordingly, in such situation the UI can be said to not pass the test that is based on the comparison 118 between the original XML record 110 and the new XML record 116.

If the UI does not pass the test according to the comparison 118, one or more actions can be triggered. In some implementations, at least one additional check of the UI can be performed. For example, such check can reveal: what changes in the UI layout the revisions have caused, the number or types of included UI elements that may have appeared or disappeared since the last version, and/or how the texts associated with one or more UI elements have changed in the new version. As a result of the manual check, the application can be modified so that the Ul is corrected.

In some implementations, the test includes at least one language acceptance test. For example, the UI can be intended for use in different geographical markets and different versions can then be generated wherein the UI elements should instead have
corresponding texts in another language. However, such language-specific modifications can be disrupted when the application is revised. A testing can therefore be performed, for example as follows.

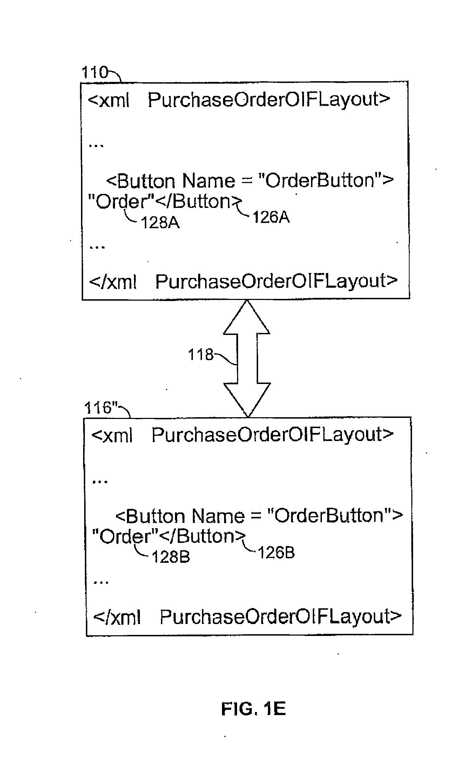

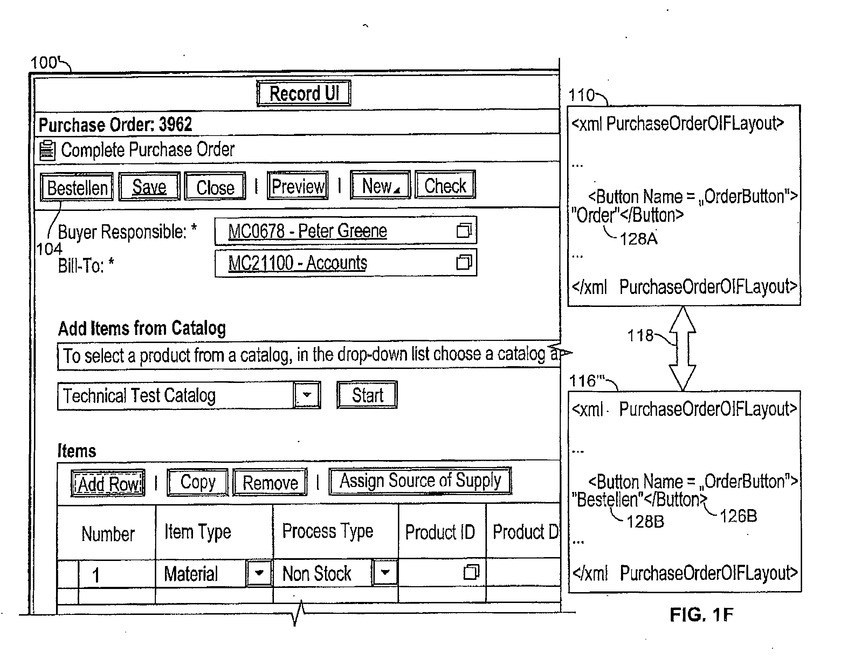

Assume that the application and its corresponding texts for UI elements are first created in a first language, say English, and that another version of the UI should be used in a market associated with a second language, say German. A log into the system (e.g., the system 102 in FIG. 1) can then be performed using the German language. The system should then generate a UI for the application where the texts of the UI elements are in German instead of English. That is, a new XML record should be generated for the German UI and then compared with the original XML record generated for the English UI.

If any element text of the English UI is not properly translated, this would be detectable, because it is reflected in the comparison between the respective XML records.

FIG. 1E shows an example where the word "order" for a Ul element is inadvertently not translated and where the German UI would therefore contain a mistake that should be corrected. Here, the original XML record 110 generated from the English
UI includes an entry 126A for a UI element that corresponds to an order button, and the entry therefore contains (or refers to) a word 128A which in this example is "order." A new XML record 116" that was generated for the German UI contains a corresponding entry 126B that also corresponds to an order button. However, the text for the entry 126B is here the word 126B which in this example reads "order," just as the word 128A did in the XML record for the English UI. Because the word 128A should have been translated, but the word 128B is identical thereto, the comparison 118 can result in an error (i.e., the German UI does not pass the test.) In some implementations, an exceptions list can be created that contains words that are identical in two or more languages, and for which the occurrence of the same word in the translated version does not necessarily indicate an error. For example, the word "Start" occurs both in German and English. That is, it can be determined, by word comparison and optionally using an exceptions list, whether at least one UI element text in the original XML record 110 has not been properly translated to the new XML record 116". An appropriate corrective action-can then be triggered.

FIG. 1F shows an example where a translated word occurs by errors. Here, a UI 100' has been generated that is similar to the UI 100 (FIG. 1A-B) in most regards, except that the German word "Bestellen" appears for the UI element 104. That is, a new XML record 116"' generated for the UI 100' contains the entry 126B, as expected, but the word 128B now reads "Bestellen," instead of "Order" as it should have, given that the UI 100' is for English-speaking users. That is, upon performing the comparison 118 it can be determined that the word 128B is not the same as the word 128A, and this indicates an error in the user interface, since both words refer to the same UI element (i.e., the order button) and should have the same language in this example. Accordingly, this issue can be flagged and appropriate action (e.g., reverting to "Order") can be taken. Other situations can cause the UI to fail the language acceptance test. In some implementations, if text for a UI element is missing in the new XML record compared to the original XML record, this can be detected. For example, if the text is initial, whereby nothing will be displayed, this can be considered an error that should be corrected.

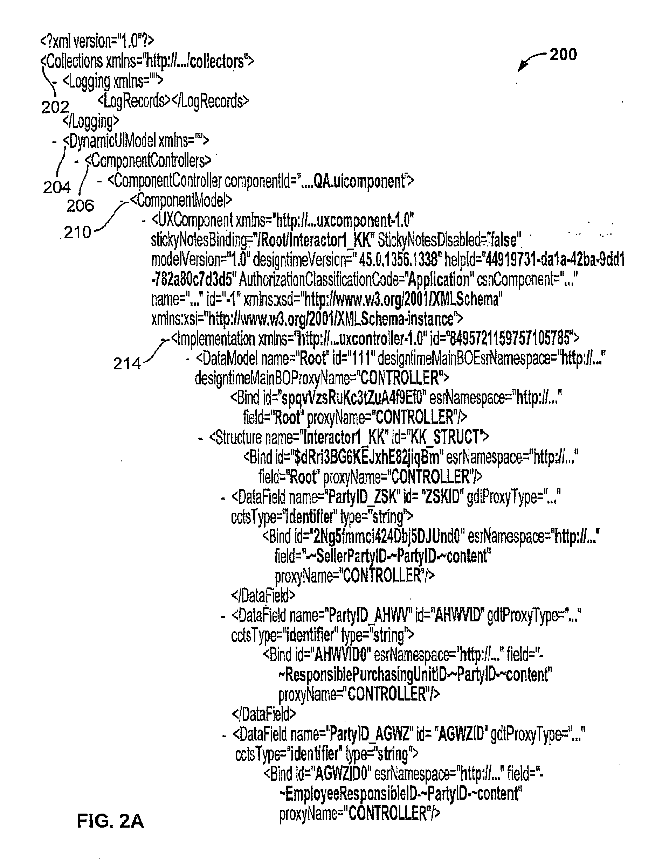

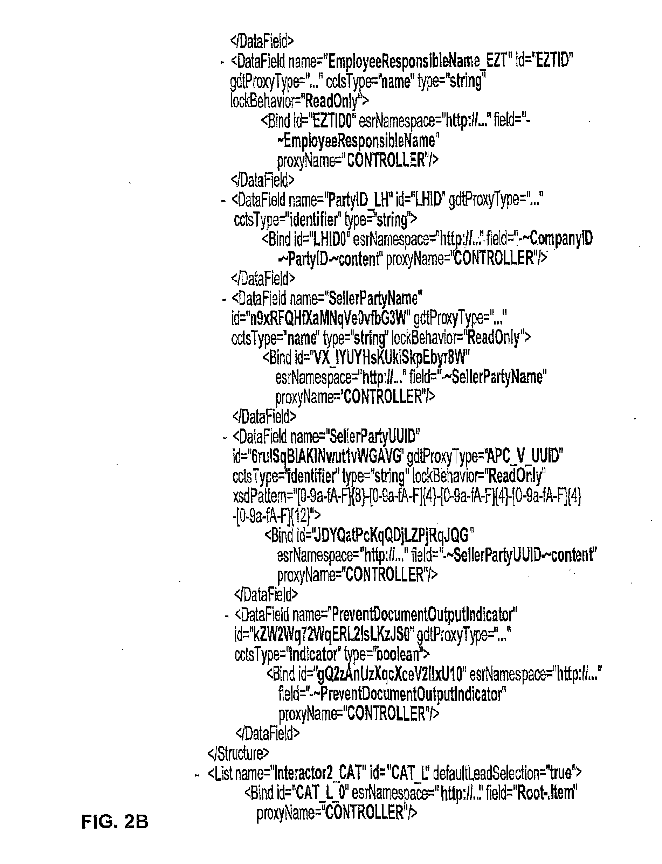

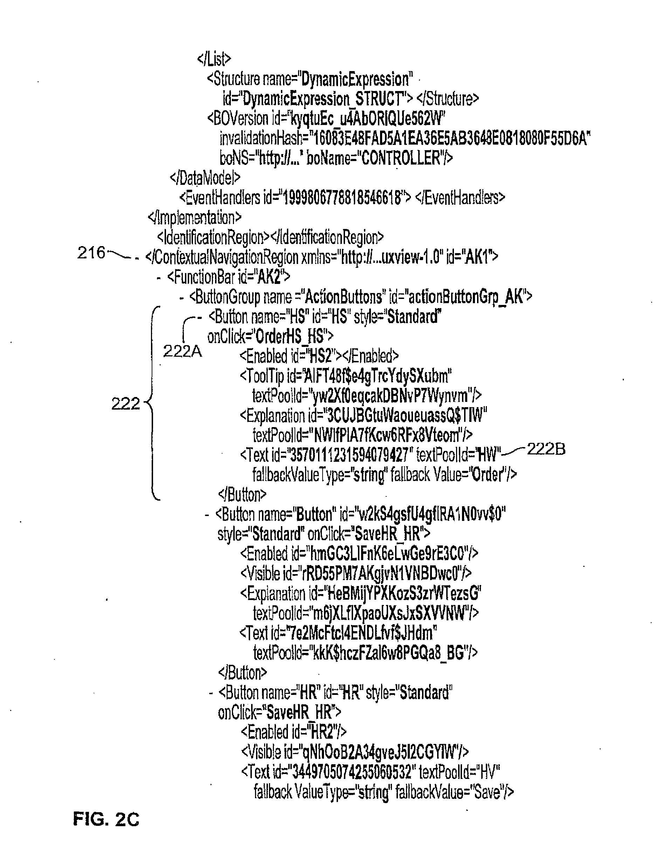

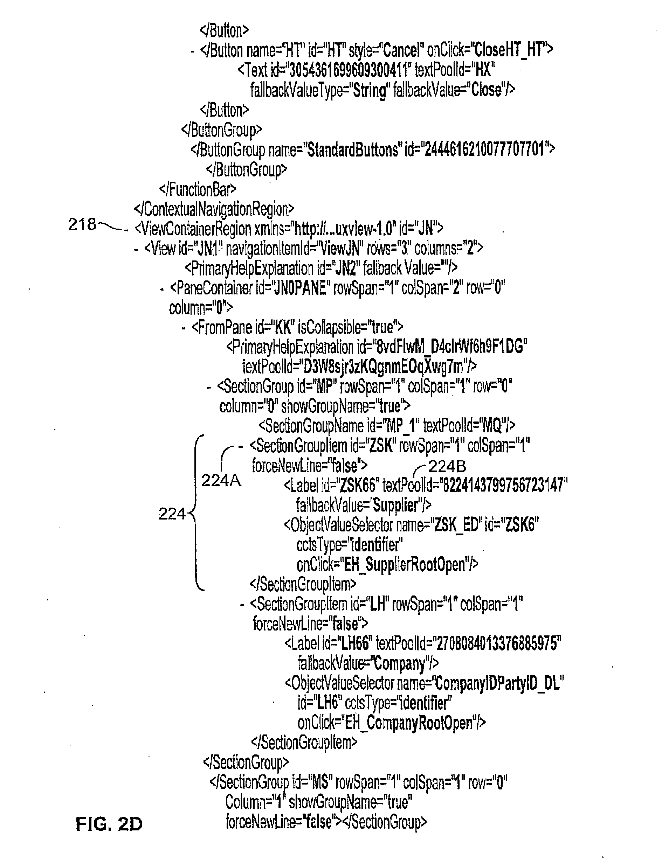

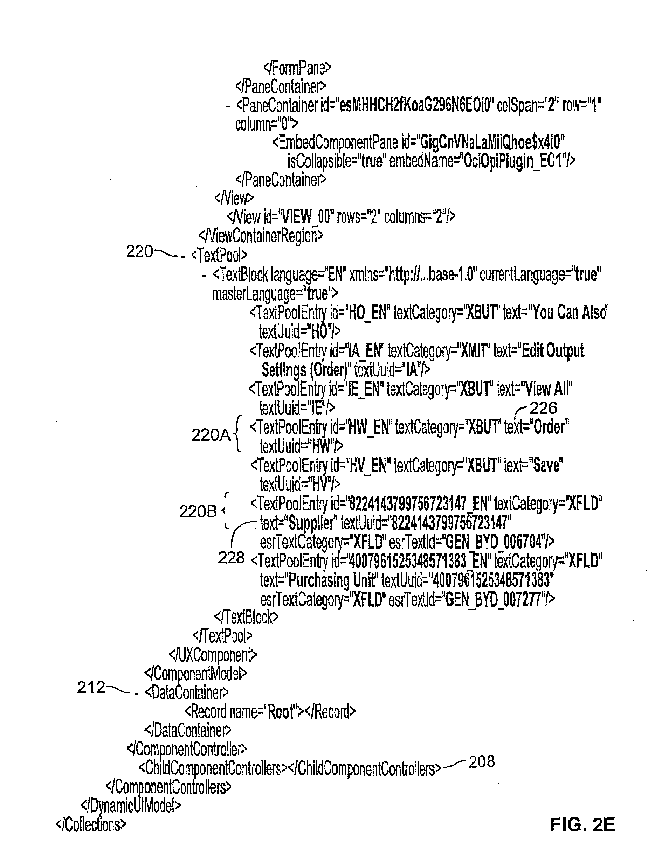

FIGS. 2A-E show an example of a markup-language record 200. In this example, the record 200 includes XML code that reflects a UI generated by an application. The record 200 can be analogous to any of the XML records mentioned above. For example, the generated UI can be processed and entries can be generated in the record 200 that reflect the layout, UI elements and/or UI element text of that UI.

At a high level, the record 200 includes a collections record 202 that contains information corresponding to the UI that was recorded. For example, the collections record can include logging information including, but not limited to, one or more log records.

The record 200 includes a dynamic UI model 204 that includes one or more sections of information reflecting the processed UI. For example, a component controller section 206 indicates that at least one component controller is present in the UI. Each component controller is uniquely identified, in some implementations by an identifier.

For example, in cases involving SAP UI Automation center, each element can have a unique ID. In some implementations, including but not limited to the SAP UI Automation center, an xpath expression can identify the corresponding UI element.

In some implementations, a section 208 can indicate one or more child component controllers associated with the component controller(s).

The record 200 (e.g., the collections record 202) can include one or more component models, as indicated by an entry 210, and one or more data containers, as indicated by an entry 212. Moreover, the record 200 can include an implementation section 214, a contextual-navigation region 216, a view container region 218, and a text pool region 220. In short, the text pool region can include text (or other information) that is associated with one or more entries elsewhere in the record, such as a button or other UI element.

Here, the contextual-navigation region 216 includes an entry 222 that corresponds to an order button in the UI. For example, this can be analogous to the element 104 in FIG. 1A or 1F. An entry 222A indicates that the name of this UI element is "HS." Moreover, an entry 222B indicates that "HW" is the text pool 1D for this UI element. That is, the text to be displayed with the order button UI element is not found directly in the entry 222 but rather in the text pool region 220. Accordingly, the text pool region includes an entry 220A that is identified using the entry 222B. In this example, the text pool ID in the text pool region 220 is "HW_EN," where the modifier "EN" indicates that this text corresponds to the English-language version of the UI. Particularly, a component 226 in the entry 220A specifies that the text for the order button is "Order."

For example, another scan over the XML record can be performed to find the correct text for the element.

The contextual-navigation region 216 also includes an entry 224 that corresponds to a "Supplier" field in the UI. For example, in a UI relating to a purchase order there will be displayed, such as based on an input. An entry 224A indicates that the ID for this UI element is "ZSK."

Moreover, an entry 224B indicates that "8224143799756723147" is the text pool ID for this UI element, and the text pool region accordingly includes an entry 220B that is identified using the entry 224B. Particularly, a component 228 in the entry 220B specifies that the text for the supplier UI element is "Supplier."

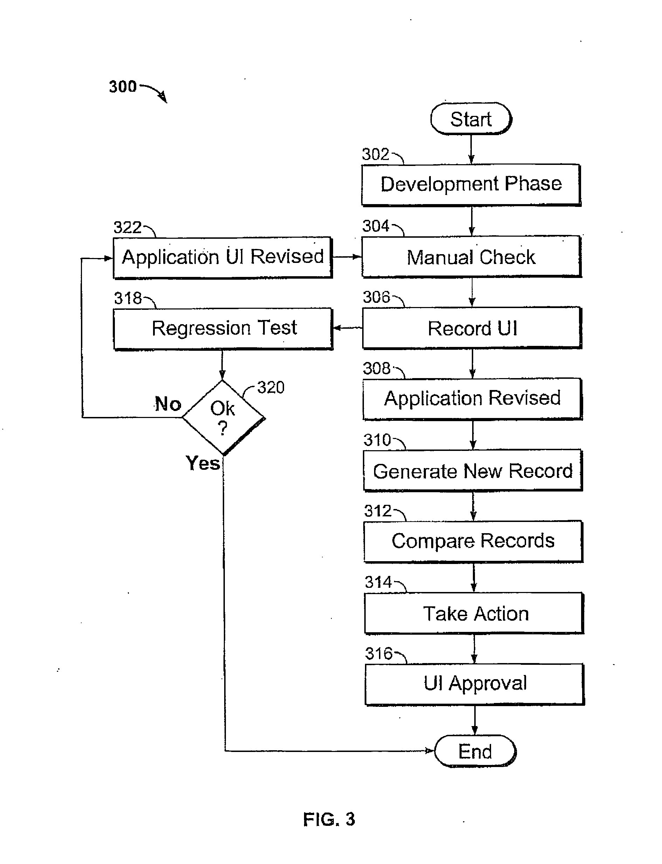

FIG. 3 shows an example method 300 for testing a UI. The method can be implemented for performance in a system, such as, but not limited to, the system 102
(FIG. 1). At stage 302 a development phase is initiated. For example, this can include
one or more writing code developments for, or otherwise working on, an application or other program being created. The stage 302 can end at a predefined time (e.g., at the close of development.) After the development, stage 304 can be performed in which the UI of the application is checked. For example, this can in part involve performing a language acceptance test on the UI. If the UI passes the test(s), a stage 306 can be performed where the UI is recorded. For example, a markup-language record corresponding to the UI can be generated.

A stage 308 can take place next, in which the application undergoes one or more revisions. In some implementations, this can occur in a phase after development closes but before the software is shipped. For example, a period of error correction and minor modifications can take place.

After the application is revised, a new record can be generated in stage 310. For example, this can be a markup-language record that is generated analogously to the way the Ul was recorded in the stage 306. At a stage 312, the generated records are compared. For example, the comparison can determine whether the layout, Ul elements or element texts reflected in one record correspond to those reflected in the other.

Based on the outcome of the comparison, one or more actions are taken in a stage 314. For example, the application can be flagged for checking, such as to correct a non- or mis-translated term. On the other hand, if the comparison does not identify any issues (e.g., if the UI has not changed in any relevant way since the previous recording) then the system can automatically make a note that the UI is still correct and does not need any further activities. When the UI has passed the necessary tests and is acceptable, the UI can be approved in a stage 316. For example, this clearing can be necessary before customer shipment is authorized.

In some implementations, the recorded UI can be checked with an automatically executed regression test. For example, this can be done using a test management system. Such an automated regression test can provide information about a corrected or otherwise
changed UI. In the method 300, stage 308 where the UI is recorded can be followed by a stage
318 where a regression test is performed. At 320, it is determined whether the UI passed the regression test. For example, if an error is detected, the UI might be different as a side effect of some correction of the software, which is indirectly linked to the UI. The UI must then be corrected so that the test returns no error. If the UI does not pass the regression test, one or more actions can be taken at a stage 322. For example, the UI can be revised to address one or more problems. Thereafter, a check can be performed at 304. If the correction results in a valid change in the UI, then the recorded UI can be updated accordingly. This can happen, for example, when adapting addresses, which are used in many Uls. On the other hand, if the UI passes the regression test, the method 300 can end.

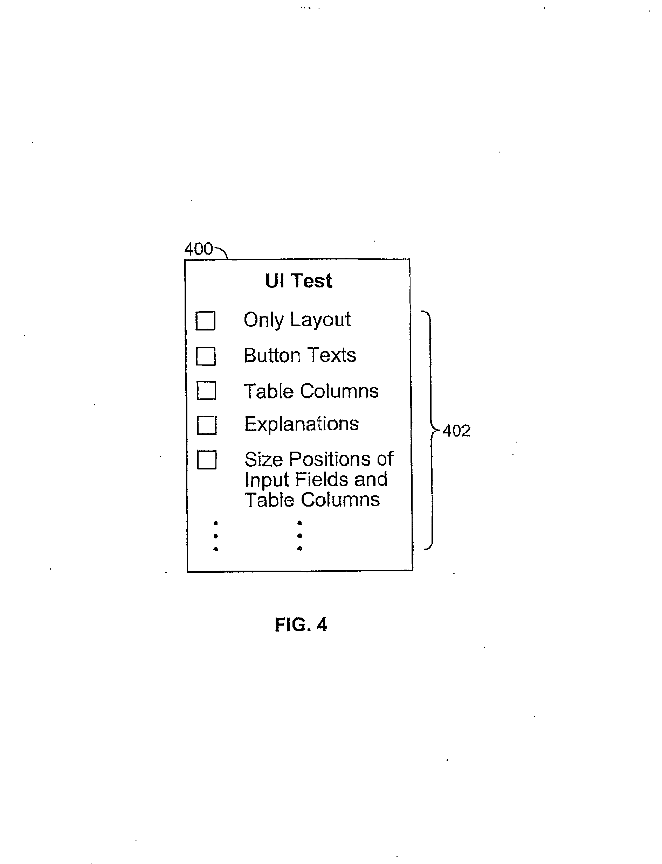

FIG. 4 shows a menu 400 that presents multiple aspects for testing a UI. In some implementations, there is a choice between two or more options or alternatives when testing a UI. For example, and without limitation, the following automated check can be performed for English Uls:
English labels
Static texts
Primary help
Correct layout
Correct alignment of labels
Correct alignment of input fields
Correct position and size of UI elements

For this and other purposes, the menu 400 can be presented-e.g., in the interface of a test tool-to offer the ability to select among different aspects for testing a UI. The menu 400 here includes selectable choices 402 which can correspond to testing only the Ul layout, testing button texts, testing table columns, testing explanations, and/or testing the size/position of input fields and table columns, to name just a few examples.

For example, if the button text option is selected, it can be tested whether the text "Order" is correct for the current UI. As other examples, for table columns "Item Type" or

"Process Type" can be tested, and for explanations, one can test "To select a product from a catalog ...."One or more of the choices 402 can be selected. For example, the selection made using the menu 400 can influence how the comparison 118 (FIGS. 1C-F) is performed.

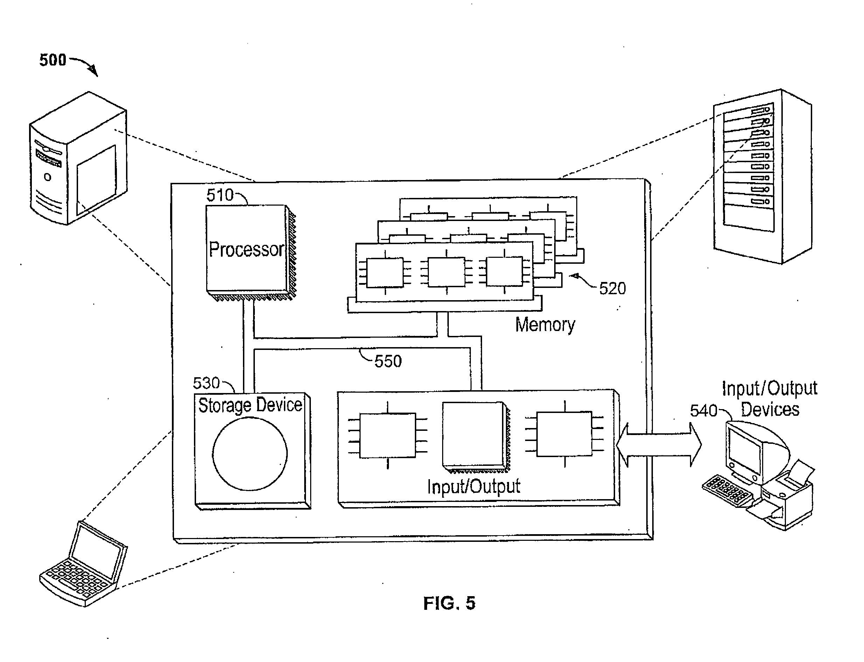

FIG. 5 is a schematic diagram of a generic computer system 500. The system 500 can be used for the operations described in association with any of the computer implement methods described previously, according to one implementation. The system 500 includes a processor 510, a memory 520, a storage device 530, and an input/output device 540. Each of the components 510, 520, 530, and 540 are interconnected using a system bus 550. The processor 510 is capable of processing instructions for execution within the system 500. In one implementation, the processor 510 is a single-threaded processor. In another implementation, the processor 510 is a multi-threaded processor.

The processor 510 is capable of processing instructions stored in the memory 520 or on the storage device 530 to display graphical information for a user interface on the input/output device 540.

The memory 520 stores information within the system 500. In some implementations, the memory 520 is a computer-readable medium. The memory 520 is a volatile memory unit in some implementations and is a non-volatile memory unit in other implementations.

The storage device 530 is capable of providing mass storage for the system 500.

In one implementation, the storage device 530 is a computer-readable medium. In various different implementations, the storage device 530 may be a floppy disk device, a hard disk device, an optical disk device, or a tape device.

The input/output device 540 provides input/output operations for the system 500.

In one implementation, the input/output device 540 includes a keyboard and/or pointing device. In another implementation, the input/output device 540 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier, e.g., in a machine-readable storage device, for execution by a programmable processor; and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system,at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive

instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for
tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM and DVD-ROM disks.

The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

A number of implementations have been described. Nevertheless, it will be understood that various modifications may be made without departing from the spirit and scope of this disclosure. Accordingly, other implementations are within the scope of the following claims.

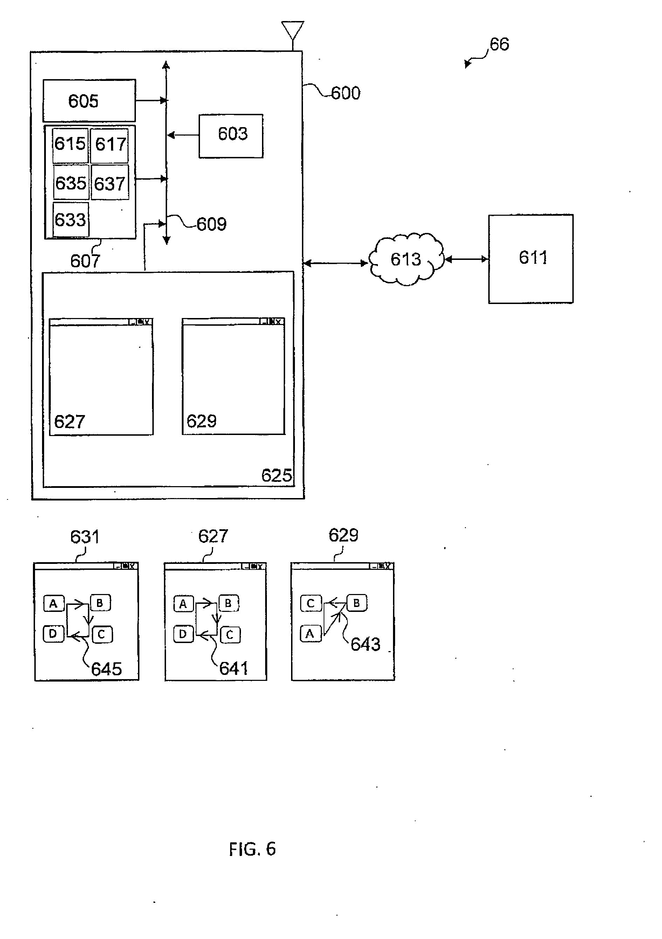

Fig. 6 shows an exemplary mobile telecommunication device 600 in a telecommunication system 66. The telecommunication system may comprise for example a cellular digital telecommunication system. The mobile telecommunication device 600 may comprise a processor 603, a transceiver 605, a memory 607 each capable of communicating with one or more components of the mobile telecommunication device 600. For example, all components are coupled to a bidirectional system bus 609.

The processor 603 may be a microprocessor, a single core processor, a multicore processor or the like. The processor 603 may control the operation of the mobile telecommunication device 600. The transceiver 605 can be implemented as a transmitting and receiving component of the mobile telecommunication device 600.

The mobile telecommunication device 600 may further comprise a display device 625 which displays characters and images and the like.

The mobile telecommunication device 600 may be connected to a development server 611 through a network 613 such as a cellular digital system telecommunication network. For example, the mobile telecommunication device 600 may be directly connected to the development server 611 or via a base station (not shown) of the cellular-digital wireless telecommunication system. Using the transceiver 605, the mobile telecommunication device 600 may exchange data with the development server 611 via the mobile cellular digital telecommunications network 613.

Memory 607 is configured to store a plurality of applications that are executable on the processor 603. A mobile application 615 of the mobile applications comprises first instructions that, when executed, generate on the display device 625 a first graphical user interface 627. For example, the display device 625 may be a touch sensitive display screen.

For sake of simplicity, the first graphical user interface 627 is shown as comprising a set of 4 user interface elements A-D. However, persons of ordinary skill in the art having benefit of the present disclosure should appreciate that the first graphical user interface 627 may contain higher or smaller number of user interface elements with same or different types. Each user inter-face element in the set of user interface elements A-D is positioned (or represented) in a defined region within the first graphical user interface 627 following a first display pattern 641.

A user interface element may comprise a button, a text box, a tab, an icon, a text field, an input field, a pane, a check-box item, a menu bar, a title bar, an action bar or item group or the like. A user interface element can likewise be an image, a displayed alphanumeric character or any combination thereof.

Memory 607 is further configured to store a receiving unit 633, generating unit 635 and an analysis unit 637.

The receiving unit 633 is adapted to receive, via the network 613, from the development server 611 an updated mobile application 617 being an updated version of the mobile application 615. The updated mobile application comprises second instructions that, when executed, generate on the display device 625 a second graphical user interface 629 using a second display pattern 643.

For sake of simplicity, the second graphical user interface 629 is shown as comprising a subset of the set of 4 user interface elements A-D of the first graphical user interface. It is shown as comprising the three user interface elements A, B and C. The user elements A, B and C are positioned within the second graphical user interface 629 in the defined regions of the user interface elements C, B and A respectively following the second display pattern 643. That is, when comparing the displays of the first and second graphical interfaces 627, 629 it is concluded that the user interface element D is missing in the second graphical user interface 629 while the user interface elements A and C changed their position in the second graphical user interface 629 compared to the first graphical user interface 627.

Upon receiving the updated mobile application 617, the generating unit 635 is adapted to generate a first markup-language record that encodes the first instructions, and a second markup-language record that encodes the second instructions. In another example, the first markup-language record may be generated before reception of the updated mobile application. The first and second markup language records may include an XML code that reflects the first and second instructions as shown, for example, in FIGS. 2A-E.

The analysis unit 637 is adapted to compare between the first and second markup-language records. The comparison may be done for example by comparing the relative positions of the user interface elements A, B, C and D in the first and second graphical user interfaces 627, 629. The position values are stored in the first and second markup language records. By comparing the position values, the analysis unit 537 may determine, for example, that the user interface element A has different position in the graphical user interfaces 627, 629 and that the user interface element D is missing from the second graphical user interface 629. In response to the fact that the first and second markup language records are different, the analysis unit 537 is adapted to rank the first and second markup language records according to a predefined ranking criterion.

The predefined criterion may comprise an energy consumption level. The ranking of the first and second markup language records may be performed by processing the first and second instructions for determining a respective first and second energy consumption level. The processing may be performed in parallel or in an interleaved manner. A record of the first and second markup language records is ranked superior to the other record if it has the lowest energy consumption level than the other record.

This energy level ranking may be advantageous as it may provide a method for bounding the applications to a maximum allowed consumption contribution. For example, the display device 625 may be attributed the maximum allowed energy consumption contribution to the total energy consumption of the mobile telecommunication device 600, such that an energy consumption of the display device 600 that is caused by the execution of at least part of the plurality of applications including the mobile application 615 is below the maximum allowed energy consumption contribution. For example, the mobile application 627 may be executed in parallel with a second mobile application, such that both applications make use of the display device 625 in the sense that they generate their respective graphical user interfaces on the display device 625. The energy consumed by the display device 625 for displaying the two graphical user interfaces should be below that maximum allowed energy consumption contribution, e.g. it should be below 10% of the total energy consumption of the mobile telecommunication device 600. This may provide controlled energy consumption within the mobile telecommunication device 600.

In another example, the predefined ranking criterion may comprise a graphical content check result, such that the ranking may be performed as follows. Upon receiving a first and second appearance check results of the first and second graphical user interfaces 627, 629 respectively, comparing the first graphical content check result with the second graphical content check result for performing the ranking.

For example, the first (second) graphical content check result comprises a first (second) similarity factor between the first (second) display pattern 641 (643) and a predefined reference display pattern 645 associated with a reference graphical user interface 631. The first (second) similarity factor may be determined as follows. A first (second) number of matches between user interface elements A-D (A-C) of the first (second) graphical user interface 627 (629) and user interface elements A-D of the reference graphical user interface 631 may be determined; and then the first (second) similarity factor may be derived from the first (second) number of matches. In one example, the first (second) similarity factor may comprise the first (second) number of patterns divided by the number of user interface elements A-D of the reference graphical user interface 631. In another example, the first (second) similarity factor may comprise the first (second) number of matches.

The first (second) number of matches may be determined as follows. The first (second) markup language record is parsed (or read) for extracting a display property of each of the user interface elements A-D (A-C) of the first (second) graphical user interface 627 (629). The display property may comprise at least one of the position, size, type of the user interface element and a combination thereof. A generated reference markup language record of the reference graphical user interface is parsed for extracting a display property of each of the user interface elements of the reference graphical user interface 631. Next, one or more or pairs of user interface elements, each comprising a user interface element of the first (second) graphical user interface 627 (629) and another user interface element of the reference graphical user interface 631. (e.g. pairs may comprise (A,D), (A,B), (C,A)...). Finally, for each pair of the one or more pairs the display property of the user interface element of the first graphical user interface 627 of the pair is compared with the display property of the user interface element of the reference graphical user interface 631 of the pair for determining whether they match or not. Thus, the first (second) number of matches comprises the number of matched pairs. In this case, ranking one record of the first and second markup language records superior to the other record if it has a higher similarity check factor than the other record.

In case the first markup language record is ranked superior to the second markup language record, the analysis unit 637 is adapted to send a request to the development server 611 for providing another updated mobile application associated with an updated second display pattern. The request is indicative of the ranking order of the first and second markup language records as well as the energy consumption levels or similarity factors. The updated second display unit may be obtained by shifting, adding, removing or a combination thereof of the user interface elements of the second graphical user interface 629.

The analysis unit 637 is adapted to receive, in response to the request, the other updated mobile application, and to repeat the steps of determining that the first and second markup-language records are different, ranking the first and second markup-language records, sending the request and receiving another updated mobile application steps until the second markup language record is ranked superior to the first markup language record. Next, the analysis unit is adapted to replace the mobile application 615 by the updated mobile application 617, by deleting the mobile application 615.

## Claims

1. A method for operating a mobile telecommunications device (600) in a telecommunication system (66) in an energy saving mode, the telecommunication system (66) comprising a development server (611) that is connected to the mobile communications device (600) via a network (613) of the telecommunication system (66); the mobile telecommunication device (600) comprising a processor (603), display device (625) and memory (607); wherein the memory (607) is configured to store a plurality of applications that are executable on the processor (603), the method comprising at the mobile telecommunication device (600):
a. providing a mobile application (615) of the plurality of applications comprising first instructions that, when executed, display on the display device (625) a first graphical user interface (627) using a first display pattern (641);
b. receiving, via the network (613), from the development server (611) an updated mobile application (617) being an updated version of the mobile application (615), wherein the updated mobile application (617) comprises second instructions that, when executed, generate on the display device (625) a second graphical user interface (629) using a second display pattern (643);
c. generating a first markup-language record that encodes the first instructions;
d. generating a second markup-language record that encodes the second instructions;
e. in response to a determination that the first and second markup-language records are different, ranking the first and second markup language records according to a predefined ranking criterion;
f. in case the first markup language record is ranked superior to the second markup language record, sending a request to the development server (611) for providing another updated mobile application associated with an updated second display pattern, wherein the request is indicative of the ranking order of the first and second markup language records; and receiving, in response to the request, the other updated mobile application;
g. repeating steps e)-f) until the second markup language record is ranked superior to the first markup language record;
h. replacing the mobile application (615) by the updated mobile application (617).

2. The method of claim 1, wherein the predefined ranking criterion comprises an energy consumption level, wherein the ranking comprises:
- processing the first and second instructions for determining a first and second energy consumption level of the display device (625) caused by the execution of the first and second instructions respectively,
- ranking one record of the first and second markup language records superior to the other record if it has a lower energy consumption level than the other record.

3. The method of any of preceding claims, wherein the predefined ranking criterion comprises a graphical content check result, the method further comprising:
- receiving a first and second graphical content check results of the first and second graphical user interfaces respectively, and
- comparing the first graphical content check result with the second graphical content check result for performing the ranking.

4. The method of claim 3, wherein the first graphical content check result comprises a first similarity factor, wherein the first similarity factor is indicative of a similarity between the first display pattern (641) and a predefined reference display pattern (645) associated with a reference graphical user interface (631), and the second appearance check result comprises a second similarity factor between the second display pattern (643) and the predefined reference display pattern (645), the method further comprising:
- determining a first number of matches between user interface elements (A-D) of the first graphical user interface (627) and user interface elements (A-D) of the reference graphical user interface (631);
- determining a second number of matches between user interface elements (A-C) of the second graphical user interface (629) and user interface elements (A-C) of the reference graphical user interface (631);
- deriving the first similarity factor from the first number of matches;
- deriving the second similarity factor from the second number of matches;
- ranking one record of the first and second markup language records superior to the other record if it has a higher similarity check factor than the other record.

5. The method of claim 4, wherein determining the first number of matches comprises
- parsing the first markup language record for extracting a display property of each of the user interface elements of the first graphical user interface (627);
- parsing a generated reference markup language record of the reference graphical user interface (631) for extracting a display property of each of the user interface elements of the reference graphical user interface (631);
- determining one or more first pairs of user interface elements, each comprising a user interface element of the first graphical user interface (627) and another user interface element of the reference graphical user interface (631);
- for each pair of the one or more first pairs comparing the display property of the user interface element of the first graphical user interface (627) of the pair with the display property of the user interface element of the reference graphical user interface (631) of the pair for determining whether they match or not, wherein the first number of matches comprises the number of matched pairs.

6. The method of any of claims 4-5, wherein the first similarity factor comprises the first number of matches divided by the number of user interface elements of the reference graphical user interface (631).

7. The method of claim 4-6, wherein determining the second number of matches comprises
- parsing the second markup language record for extracting a display property of each of the user interface elements of the second graphical user interface (629);
- parsing a generated reference markup language record of the reference graphical user interface for extracting a display property of each of the user interface elements of the reference graphical user interface (631);
- determining one or more or second pairs of user interface elements, each comprising a user interface element of the second graphical user interface and another user interface element of the reference graphical user interface;
- for each pair of the one or more second pairs comparing the display property of the user interface element of the second graphical user interface (629) of the pair with the display property of the user interface element of the reference graphical user interface (631) of the pair for determining whether they match or not, wherein the second number of matches comprises the number of matched pairs.

8. The method of any of claims 4-7, wherein the second similarity factor comprises the second number of matches divided by the number of user interface elements of the reference graphical user interface.

9. The method of claim 5-7, wherein the display property comprises at least one of position, type, size of the user interface element and a combination thereof.

10. The method of any of preceding claims, further comprising
- detecting, before generating the second markup-language record, that a user logs in using a different human language than displayed on the first graphical user interface (627); and
- determining that the first and second markup-language records are different only in case at least one user-interface element text in the first markup language record has not been translated to the second markup-language record in accordance with the human language.

11. The method of claim 10, further comprising receiving an exception list of multi-language common user-interface element texts, wherein the determining that the first and second markup-language records are different is only performed in case the at least one user-interface element text is outside the exception list.

12. A mobile telecommunication device (600) in a telecommunication system (66), wherein the telecommunication system (66) comprises a development server (611) that is connected to the mobile communications device (600) via a network (613) of the telecommunication system (66); the mobile telecommunication device (600) comprising a processor (603), display device (625) and memory (607); wherein the memory (607) configured to store a plurality of applications that are executable on the processor (603), wherein a mobile application (615) of the plurality of applications comprises first instructions that, when executed, display on the display device (625) a first graphical user interface (627) using a first display pattern (641), the mobile telecommunication device (600) comprising:
- a receiving unit (633) adapted for receiving, via the network (613), from the development server (611) an updated mobile application (617) being an updated version of the mobile application (615), wherein the updated mobile application (617) comprises second instructions that, when executed, generate on the display device (627) a second graphical user interface (629) using a second display pattern (643);
- a generating unit (635) adapted for generating a first markup-language record that encodes the first instructions; and generating a second markup-language record that encodes the second instructions;
- an analysis unit (637) adapted for
a. determining that the first and second markup-language records are different, and ranking the first and second markup language records according to a predefined ranking criterion;
b. in case the first markup language record is ranked superior to the second markup language record, sending a request to the development server for providing another updated mobile application associated with an updated second display pattern, wherein the request is indicative of the ranking order of the first and second markup language records; and receiving, in response to the request, the other updated mobile application;
c. repeating steps a)-b) until the second markup language record is ranked superior to the first markup language record;
d. replacing the mobile application (615) by the updated mobile application (617).

## Patentansprüche

1. Verfahren zum Betreiben einer mobilen Telekommunikationsvorrichtung (600) in einem Telekommunikationssystem (66) in einem Energiesparmodus, wobei das Telekommunikationssystem (66) einen Entwicklungsserver (611) aufweist, der über ein Netzwerk (613) des Telekommunikationssystems (66) mit der mobilen Kommunikationsvorrichtung (600) verbunden ist; wobei die mobile Telekommunikationsvorrichtung (600) einen Prozessor (603), eine Anzeigevorrichtung (625) und einen Speicher (607) aufweist; wobei der Speicher (607) zum Speichern mehrerer Applikationen konfiguriert ist, die an dem Prozessor (603) ausführbar sind, wobei das Verfahren an der mobilen Telekommunikationsvorrichtung (600) Folgendes aufweist:
a. Bereitstellen einer mobilen Applikation (615) der mehreren Applikationen, die erste Anweisungen aufweist, die bei Ausführung auf der Anzeigevorrichtung (625) unter Verwendung eines ersten Anzeigemusters (641) eine erste grafische Benutzeroberfläche (627) anzeigen,
b. Empfangen einer aktualisierten mobilen Applikation (617), die eine aktualisierte Version der mobilen Applikation (615) ist, von dem Entwicklungsserver (611) über das Netzwerk (613), wobei die aktualisierte mobile Applikation (617) zweite Anweisungen aufweist, die bei Ausführung an der Anzeigevorrichtung (625) unter Verwendung eines zweiten Anzeigemusters (643) eine zweite grafische Benutzeroberfläche (629) erzeugen,
c. Erzeugen eines ersten Auszeichnungssprachendatensatzes, der die ersten Anweisungen codiert,
d. Erzeugen eines zweiten Auszeichnungssprachendatensatzes, der die zweiten Anweisungen codiert,
e. Einstufen des ersten und des zweiten Auszeichnungssprachendatensatzes gemäß einem vordefinierten Einstufungskriterium als Reaktion auf eine Ermittlung, dass der erste und der zweite Auszeichnungssprachendatensatz verschieden sind,
f. Senden einer Anfrage an den Entwicklungsserver (611) zur Bereitstellung einer weiteren aktualisierten mobilen Applikation, die mit einem aktualisierten zweiten Anzeigemuster assoziiert ist, im Fall, dass der erste Auszeichnungssprachendatensatz höher eingestuft wird als der zweite Auszeichnungssprachendatensatz, wobei die Anfrage die Einstufungsordnung des ersten und des zweiten Auszeichnungssprachendatensatzes erkennen lässt; und Empfangen der anderen aktualisierten mobilen Applikation als Antwort auf die Anfrage,
g. Wiederholen der Schritte e) bis f), bis der zweite Auszeichnungssprachendatensatz höher als der erste Auszeichnungssprachendatensatz eingestuft wird,
h. Ersetzen der mobilen Applikation (615) durch die aktualisierte mobile Applikation (617).

2. Verfahren nach Anspruch 1, wobei das vordefinierte Einstufungskriterium ein Energieverbrauchsniveau aufweist, wobei die Einstufung Folgendes aufweist:
- Verarbeiten der ersten und zweiten Anweisungen zum Ermitteln eines ersten und eines zweiten Energieverbrauchsniveaus der Anzeigevorrichtung (625), das durch die Ausführung der ersten bzw. der zweiten Anweisungen veranlasst wird,
- höheres Einstufen eines Datensatzes des ersten und des zweiten Auszeichnungssprachendatensatzes gegenüber dem anderen Datensatz, wenn er ein niedrigeres Energieverbrauchsniveau als der andere Datensatz hat.

3. Verfahren nach einem der vorhergehenden Ansprüche, wobei das vordefinierte Einstufungskriterium das Ergebnis einer Prüfung des grafischen Inhalts aufweist, wobei das Verfahren ferner Folgendes aufweist:
- Erhalten eines ersten und eines zweiten Ergebnisses einer Prüfung des grafischen Inhalts der ersten bzw. der zweiten grafischen Benutzeroberfläche und
- Vergleichen des ersten Ergebnisses einer Prüfung des grafischen Inhalts mit dem zweiten Ergebnis einer Prüfung des grafischen Inhalts zum Durchführen der Einstufung.

4. Verfahren nach Anspruch 3, wobei das erste Ergebnis einer Prüfung des grafischen Inhalts einen ersten Ähnlichkeitsfaktor aufweist, wobei der erste Ähnlichkeitsfaktor eine Ähnlichkeit zwischen dem ersten Anzeigemuster (641) und einem vordefinierten Referenzanzeigemuster (645), das mit einer grafischen Referenzbenutzeroberfläche (631) assoziiert ist, erkennen lässt, und das zweite Ergebnis einer Erscheinungsbildprüfung einen zweiten Ähnlichkeitsfaktor zwischen dem zweiten Anzeigemuster (643) und dem vordefinierten Referenzanzeigemuster (645) aufweist, wobei das Verfahren ferner Folgendes aufweist:
- Ermitteln einer ersten Anzahl von Übereinstimmungen zwischen Benutzeroberflächenelementen (A-D) der ersten grafischen Benutzeroberfläche (627) und Benutzeroberflächenelementen (A-D) der grafischen Referenzbenutzeroberfläche (631),
- Ermitteln einer zweiten Anzahl von Übereinstimmungen zwischen Benutzeroberflächenelementen (A-C) der zweiten grafischen Benutzeroberfläche (629) und Benutzeroberflächenelementen (A-C) der grafischen Referenzbenutzeroberfläche (631),
- Ableiten des ersten Ähnlichkeitsfaktors von der ersten Anzahl von Übereinstimmungen,
- Ableiten des zweiten Ähnlichkeitsfaktors von der zweiten Anzahl von Übereinstimmungen,
- höheres Einstufen eines Datensatzes aus dem ersten und dem zweiten Auszeichnungssprachendatensatz als dem anderen Datensatz, wenn er einen höheren Ähnlichkeitsprüfungsfaktor als der andere Datensatz hat.

5. Verfahren nach Anspruch 4, wobei das Ermitteln der ersten Anzahl von Übereinstimmungen Folgendes aufweist:
- Parsen des ersten Auszeichnungssprachendatensatzes zum Extrahieren einer Anzeigeeigenschaft jedes der Benutzeroberflächenelemente der ersten grafischen Benutzeroberfläche (627),
- Parsen eines erzeugten Referenz-Auszeichnungssprachendatensatzes der grafischen Referenzbenutzeroberfläche (631) zum Extrahieren einer Anzeigeeigenschaft jedes der Benutzeroberflächenelemente der grafischen Referenzbenutzeroberfläche (631),
- Ermitteln von einem oder mehreren ersten Paaren von Benutzeroberflächenelementen, die jeweils ein Benutzeroberflächenelement der ersten grafischen Benutzeroberfläche (627) und ein weiteres Benutzeroberflächenelement der grafischen Referenzbenutzeroberfläche (631) aufweisen,
- Vergleichen, für jedes Paar des einen oder der mehreren Paare, der Anzeigeeigenschaft des Benutzeroberflächenelements der ersten grafischen Benutzeroberfläche (627) des Paares mit der Anzeigeeigenschaft des Benutzeroberflächenelements der grafischen Referenzbenutzeroberfläche (631) des Paares zum Ermitteln, ob sie übereinstimmen oder nicht, wobei die erste Anzahl von Übereinstimmungen die Anzahl der übereinstimmenden Paare umfasst.

6. Verfahren nach einem der Ansprüche 4 bis 5, wobei der erste Ähnlichkeitsfaktor die erste Anzahl von Übereinstimmungen geteilt durch die Anzahl von Benutzeroberflächenelementen der grafischen Referenzbenutzeroberfläche (631) umfasst.

7. Verfahren nach einem der Ansprüche 4 bis 6, wobei das Ermitteln der zweiten Anzahl von Übereinstimmungen Folgendes aufweist:
- Parsen des zweiten Auszeichnungssprachendatensatzes zum Extrahieren einer Anzeigeeigenschaft von jedem der Benutzeroberflächenelemente der zweiten grafischen Benutzeroberfläche (629),
- Parsen eines erzeugten Referenzauszeichnungssprachendatensatzes der grafischen Referenzbenutzeroberfläche zum Extrahieren einer Anzeigeeigenschaft von jedem der Benutzeroberflächenelemente der grafischen Referenzbenutzeroberfläche (631),
- Ermitteln von einem oder mehreren zweiten Paaren von Benutzeroberflächenelementen, die jeweils ein Benutzeroberflächenelement der zweiten grafischen Benutzeroberfläche und ein weiteres Benutzeroberflächenelement der grafischen Referenzbenutzeroberfläche aufweisen,
- Vergleichen, für jedes Paar des einen oder der mehreren zweiten Paare, der Anzeigeeigenschaft des Benutzeroberflächenelements der zweiten grafischen Benutzeroberfläche (629) des Paares mit der Anzeigeeigenschaft des Benutzeroberflächenelements der grafischen Referenzbenutzeroberfläche (631) des Paares zum Ermitteln, ob sie übereinstimmen oder nicht, wobei die zweite Anzahl von Übereinstimmungen die Anzahl der übereinstimmenden Paare umfasst.

8. Verfahren nach einem der Ansprüche 4 bis 7, wobei der zweite Ähnlichkeitsfaktor die zweite Anzahl von Übereinstimmungen geteilt durch die Anzahl von Benutzeroberflächenelementen der grafischen Referenzbenutzeroberfläche umfasst.

9. Verfahren nach einem der Ansprüche 5 bis 7, wobei die Anzeigeeigenschaft wenigstens eines der folgenden umfasst: Position, Typ, Größe des Benutzeroberflächenelements und eine Kombination davon.

10. Verfahren nach einem der vorhergehenden Ansprüche, das ferner Folgendes aufweist:
- Erkennen, vor dem Erzeugen des zweiten Auszeichnungssprachendatensatzes, dass ein Benutzer sich mit einer anderen menschlichen Sprache als der auf der ersten grafischen Benutzeroberfläche (627) angezeigten anmeldet, und
- Ermitteln, dass der erste und der zweite Auszeichnungssprachendatensatz nur in dem Fall verschieden sind, dass wenigstens ein Benutzeroberflächenelementtext in dem ersten Auszeichnungssprachendatensatz nicht gemäß der menschlichen Sprache in den zweiten Auszeichnungssprachendatensatz übersetzt wurde.

11. Verfahren nach Anspruch 10, das ferner das Erhalten einer Ausnahmeliste von mehrsprachigen gemeinsamen Benutzeroberflächenelementtexten auf weist, wobei das Ermitteln, dass der erste und der zweite Auszeichnungssprachendatensatz verschieden sind, nur in dem Fall durchgeführt wird, dass der wenigstens eine Benutzeroberflächenelementtext außerhalb der Ausnahmeliste ist.

12. Mobile Telekommunikationsvorrichtung (600) in einem Telekommunikationssystem (66), wobei das Telekommunikationssystem (66) einen Entwicklungsserver (611) aufweist, der über ein Netzwerk (613) des Telekommunikationssystems (66) mit der mobilen Kommunikationsvorrichtung (600) verbunden ist; wobei die mobile Telekommunikationsvorrichtung (600) einen Prozessor (603), eine Anzeigevorrichtung (625) und einen Speicher (607) aufweist; wobei der Speicher (607) zum Speichern mehrerer Applikationen konfiguriert ist, die an dem Prozessor (603) ausführbar sind, wobei eine mobile Applikation (615) der mehreren Applikationen erste Anweisungen auf weist, die bei Ausführung auf der Anzeigevorrichtung (625) unter Verwendung eines ersten Anzeigemusters (641) eine erste grafische Benutzeroberfläche (627) anzeigen, wobei die mobile Telekommunikationsvorrichtung (600) Folgendes aufweist:
- eine Empfangseinheit (633), die zum Empfangen einer aktualisierten mobilen Applikation (617), die eine aktualisierte Version der mobilen Applikation (615) ist, von dem Entwicklungsserver (611) über das Netzwerk (613) ausgeführt ist, wobei die aktualisierte mobile Applikation (617) zweite Anweisungen aufweist, die bei Ausführung an der Anzeigevorrichtung (627) unter Verwendung eines zweiten Anzeigemusters (643) eine zweite grafische Benutzeroberfläche (629) erzeugen,
- eine Erzeugungseinheit (635), die zum Erzeugen eines ersten Auszeichnungssprachendatensatzes, der die ersten Anweisungen codiert, und zum Erzeugen eines zweiten Auszeichnungssprachendatensatzes, der die zweiten Anweisungen codiert,
- eine Analyseeinheit (637), die ausgeführt ist zum:
a. Ermitteln, dass der erste und der zweite Auszeichnungssprachendatensatz verschieden sind, und Einstufen des ersten und des zweiten Auszeichnungssprachendatensatzes gemäß einem vordefinierten Einstufungskriterium,
b. Senden einer Anfrage an den Entwicklungsserver zur Bereitstellung einer weiteren aktualisierten mobilen Applikation, die mit einem aktualisierten zweiten Anzeigemuster assoziiert ist, im Fall, dass der erste Auszeichnungssprachendatensatz höher eingestuft wird als der zweite Auszeichnungssprachendatensatz, wobei die Anfrage die Einstufungsordnung des ersten und des zweiten Auszeichnungssprachendatensatzes erkennen lässt; und Empfangen der anderen aktualisierten mobilen Applikation als Antwort auf die Anfrage,
c. Wiederholen der Schritte a) bis b), bis der zweite Auszeichnungssprachendatensatz höher als der erste Auszeichnungssprachendatensatz eingestuft wird,
d. Ersetzen der mobilen Applikation (815) durch die aktualisierte mobile Applikation (617).

## Revendications

1. Procédé de fonctionnement d'un appareil mobile de télécommunication (600) dans un système de télécommunication (66) en mode économie d'énergie, le système de télécommunication (66) comprenant un serveur de développement (611) qui est connecté à l'appareil mobile de télécommunication (600) via un réseau (613) du système de télécommunication (66) ; l'appareil mobile de télécommunication (600) comprenant un processeur (603), un dispositif d'affichage (625) et une mémoire (607) ; où la mémoire (607) est configurée pour stocker une pluralité d'applications qui sont exécutables par le processeur (603), le procédé comprenant, au niveau de l'appareil mobile de télécommunications (600) :
a. la mise à disposition d'une application mobile (615) de la pluralité des applications comprenant les premières instructions qui, quand elles sont exécutées, visualisent sur le dispositif d'affichage (625) une première interface graphique utilisateur (627) utilisant une première mise en forme d'affichage (641) ;
b. la réception, via le réseau (613), en provenance du serveur de développement (611), d'une application mobile mise à jour (617) qui est une version actualisée de l'application mobile (615), où l'application mobile mise à jour (617) comprend les secondes instructions qui, lorsqu'elles sont exécutées, génèrent au niveau du dispositif d'affichage (625) une seconde interface graphique utilisateur (629) utilisant une seconde mise en forme d'affichage (643) ;
c. la génération d'un premier enregistrement du langage de balisage qui encode les premières instructions ;
d. la génération d'un second enregistrement du langage de balisage qui encode les secondes instructions ;
e. le classement des premier et second enregistrements du langage des balisages selon un critère de sélection prédéfini en réponse à la détermination que le premier enregistrement du langage de balisage est différent du second ;
f. dans le cas où le premier enregistrement du langage de balisage a un rang supérieur à celui du second enregistrement du langage de balisage, l'envoi d'une requête au serveur de développement (611) pour obtenir une autre application mobile actualisée associée à une seconde mise en forme actualisée de l'affichage, où la requête est révélatrice du rang de classement des premier et second enregistrements du langage de balisage ; et la réception, en réponse à cette requête, de l'autre application mobile mise à jour ;
g. la répétition des étapes e)-f) jusqu'à ce que le second enregistrement du langage de balisage ait un rang supérieur à celui du premier enregistrement du langage de balisage ;
h. le remplacement de l'application mobile (615) par l'application mobile mise à jour (617).

2. Procédé selon la revendication 1, dans lequel le critère de sélection prédéfini comprend un niveau de consommation d'énergie, dans lequel le classement comprend :
- le traitement des premières et secondes instructions pour établir un premier et un second niveaux de consommation d'énergie du dispositif d'affichage (625), occasionnés par l'exécution respective des premières et secondes instructions,
- le classement d'un enregistrement pris parmi les premier et second enregistrements du langage de balisage à un rang supérieur à celui de l'autre enregistrement s'il a un niveau de consommation d'énergie inférieur à celui de l'autre enregistrement.

3. Procédé selon l'une quelconque des revendications précédentes, dans lequel le critère de classement prédéfini comprend un résultat du contrôle du contenu graphique, le procédé comprenant en outre :
- la réception des premier et second résultats du contrôle du contenu graphique respectivement des première et seconde interfaces graphiques utilisateur, et
- la comparaison du premier résultat du contrôle du contenu graphique avec le second résultat du contrôle du contenu graphique pour effectuer le classement.

4. Procédé selon la revendication 3, dans lequel le premier résultat du contrôle du contenu graphique comprend un premier facteur de similarité, dans lequel le premier facteur de similarité est révélateur d'une similarité entre la première mise en forme de l'affichage (641) et une mise en forme de l'affichage prédéfinie de référence (645) associée à l'interface graphique utilisateur de référence (631), et le second résultat de contrôle de l'apparence comprend un second facteur de similarité entre la seconde mise en forme de l'affichage (643) et la mise en forme de l'affichage prédéfinie de référence (645), le procédé comprenant en outre :
- la détermination d'un premier nombre de correspondances entre les éléments de l'interface utilisateur (A-D) de la première interface graphique utilisateur (627) et les éléments de l'interface utilisateur (A-D) de l'interface graphique utilisateur de référence (631) ;
- la détermination d'un second nombre de correspondances entre les éléments de l'interface utilisateur (A-C) de la seconde interface graphique utilisateur (629) et les éléments de l'interface utilisateur (A-C) de l'interface graphique utilisateur de référence (631) ;
- la déduction du premier facteur de similarité à partir du premier nombre de correspondances ;
- la déduction du second facteur de similarité à partir du second nombre de correspondances ;
- le classement d'un enregistrement pris parmi les premier et second enregistrements du langage de balisage à un rang supérieur à celui de l'autre enregistrement s'il possède un facteur de contrôle de similarité supérieur à celui de l'autre enregistrement.

5. Procédé selon la revendication 4, dans lequel la détermination du premier nombre de correspondances comprend :
- l'analyse du premier enregistrement du langage de balisage afin d'en extraite la propriété d'affichage de chaque élément de l'interface utilisateur de la première interface graphique utilisateur (627) ;
- l'analyse de l'enregistrement du langage de balisage de référence généré de l'interface graphique utilisateur de référence (631) pour en extraire la propriété d'affichage de chaque élément de l'interface utilisateur de l'interface graphique utilisateur de référence (631) ;
- la détermination d'une, ou de plusieurs, premières paires d'éléments d'interface utilisateur, chacune comprenant un élément d'interface utilisateur de la première interface graphique utilisateur (627) et un autre élément de l'interface utilisateur de l'interface graphique utilisateur de référence (631) ;
- pour chaque paire d'une, ou des plusieurs, premières paires de comparaison de la propriété d'affichage de l'élément d'interface utilisateur de la première interface graphique utilisateur (627) de la paire formée avec la propriété d'affichage de l'élément d'interface utilisateur de l'interface graphique utilisateur de référence (631) de la paire, la détermination si elles correspondent ou pas, où le premier nombre de correspondances comprend le nombre de paires correspondantes.

6. Procédé selon l'une quelconque des revendications 4-5, dans lequel le premier facteur de similarité comprend le premier nombre de correspondances divisé par le nombre d'éléments d'interface utilisateur de l'interface graphique utilisateur de référence (631).

7. Procédé selon les revendications 4-6, dans lequel la détermination du second nombre de correspondances comprend :
- l'analyse du second enregistrement du langage de balisage afin d'en extraire la propriété d'affichage de chacun des éléments de l'interface utilisateur de la seconde interface graphique utilisateur (629) ;
- l'analyse de l'enregistrement généré du langage de balisage de référence de l'interface graphique utilisateur de référence pour en extraire la propriété d'affichage de chacun des éléments de l'interface utilisateur de l'interface graphique utilisateur de référence (631) ;
- la détermination de l'une ou de plusieurs secondes paires d'éléments de l'interface utilisateur, chacune comprenant un élément de l'interface utilisateur de la seconde interface graphique utilisateur et un autre élément de l'interface utilisateur de l'interface graphique utilisateur de référence ;
- pour chaque paire d'une ou des plusieurs secondes paires, la comparaison de la propriété d'affichage de l'élément de l'interface utilisateur de la seconde interface graphique utilisateur (629) de la paire formée avec la propriété d'affichage de l'élément de l'interface de l'interface graphique utilisateur de référence (631) de la paire pour déterminer si elles correspondent ou non, où le second nombre de correspondances comprend le nombre de paires correspondantes.

8. Procédé selon l'une quelconque des revendications 4-7, dans lequel le second facteur de similarité comprend le second nombre de correspondances divisé par le nombre d'éléments d'interface utilisateur de l'interface graphique utilisateur de référence.

9. Procédé selon les revendications 5-7, dans lequel la propriété d'affichage comprend au moins l'un des paramètres parmi la position, le type, la dimension de l'élément de l'interface utilisateur et une combinaison de ceux-ci.

10. Procédé selon l'une quelconque des revendications précédentes, comprenant en outre :
- la détection, avant la génération du second enregistrement du langage de balisage, d'un utilisateur qui se connecte au moyen d'un langage humain différent de celui affiché sur la première interface graphique utilisateur (627) ; et
- la détermination que les premier et second enregistrements du langage de balisage sont différents uniquement dans le cas où au moins un élément de texte de l'interface utilisateur dans le premier enregistrement du langage de balisage n'a pas été traduit dans le second enregistrement du langage de balisage conformément au langage humain.

11. Procédé selon la revendication 10, comprenant en outre la réception d'une liste d'exceptions d'éléments de texte multi langages communs de l'interface utilisateur, où la détermination que les premier et second enregistrements du langage de balisage sont différents est uniquement réalisée dans le cas où le au moins un élément de texte de l'interface utilisateur ne fait pas partie de la liste des exceptions.

12. Appareil mobile de télécommunication (600) dans un système de télécommunication (66), dans lequel le système de communication (66) comprend un serveur de développement (611) qui est connecté à l'appareil mobile de télécommunication (600) via un réseau (613) du système de communication (66) ; l'appareil mobile de télécommunication (600) comprenant un processeur (603), un dispositif d'affichage (625) et une mémoire (607) ; dans lequel la mémoire (607) est configurée pour stocker une pluralité d'applications qui sont exécutables par le processeur (603), dans lequel une application mobile (615) de la pluralité des applications comprend les premières instructions qui, quand elles sont exécutées, affichent sur le dispositif d'affichage (625) une première interface graphique utilisateur (627) au moyen d'une première mise en forme de l'affichage (641), l'appareil mobile de télécommunication (600) comprenant :
- une unité de réception (633) adaptée à recevoir, via le réseau (613), en provenance du serveur de développement (611), une application mobile mise à jour (617) qui est une version actualisée de l'application mobile (615), où l'application mobile mise à jour (617) comprend les secondes instructions lesquelles, quand elles sont exécutées, génèrent sur le dispositif d'affichage (627) une seconde interface graphique utilisateur (629) en utilisant une seconde mise en forme de l'affichage (643) ;
- une unité de génération (635) adaptée à générer un premier enregistrement du langage de balisage, lequel encode les premières instructions ; et à générer un second enregistrement du langage de balisage, lequel encode les secondes instructions ;
- une unité d'analyse (637) adaptée à
a. la détermination du fait que les premier et second enregistrements du langage de balisage sont différents, et au classement des premier et second enregistrements du langage de balisage selon un critère de sélection prédéfini ;
b. au cas où le premier enregistrement du langage de balisage a un rang supérieur à celui du second enregistrement du langage de balisage, à l'émission d'une requête vers le serveur de développement afin de fournir une autre application mobile actualisée associée à la seconde mise en forme de l'affichage actualisée, où la requête est révélatrice de l'ordre du classement des premier et second enregistrements du langage de balisage ; et à la réception, en réponse à la requête, de l'autre application mobile mise à jour ;
c. à la répétition des étapes a)-b) jusqu'au classement du second enregistrement du langage de balisage à un rang supérieur à celui du premier enregistrement du langage de balisage ;
d. au remplacement de l'application mobile (615) par l'application mobile mise à jour (617).
